# EUROPEAN PATENT APPLICATION

(11) **EP 3 305 244 A1**
(43) Date of publication of application: **11.04.2018**
(21) Application number: 15893928.0
(22) Date of filing: 26.10.2015
(51) Int. Cl.: A61C 17/16

(54) **BACK-FLUSHING PLATE OF MULTIFUNCTIONAL ORAL CARE TOOL**

(30) Priority: 04.06.2015 CN 201510306416
(71) Applicant: Meng, Yong, Bengbu, Anhui 233700 (CN)
(72) Inventor: WANG, Yu, Beijing 100082 (CN); MENG, Yong, Bengbu City, Anhui 233700 (CN)
(74) Representative: Lang, Christian
(86) International application number: PCT/CN2015/092843
(87) International publication number: WO 2016/192280

(57) **Abstract**

A back-flushing plate (4) of a multifunctional oral care tool. The back-flushing plate (4) is provided at a back end of brush heads (1) and has an end portion lower than an end portion of the brush heads (1). A pair of brush heads (1) is driven to rotate by a pair of transmission rods (5), such that the brush heads produce a powerful suction flow. Sucked water splashes onto the back-flushing plate and generate a powerful flush flow, thereby attains a goal of flushing the oral waste away. It solves a problem of deep cleaning of furs and also solves a problem of waste liquid, such as tooth-brushing foam, remaining in an oral cavity.

## Description

### TECHNICAL FIELD

The present invention relates to a back-flushing plate of a multifunctional oral care tool.

### BACKGROUND TECHNIQUE

Brushing teeth has become an indispensable task in our daily life for oral cleaning. However, the tooth-brushing foam generated when brushing the teeth contains lots of bacteria, viruses, food debris, and rotten and decomposed fermented matter. Thus, it needs to be cleaned without remaining in the oral cavity. We usually clean the remaining toothpaste form by rinsing. However, this approach usually cannot thoroughly clean the waste in the oral cavity, thus making it impossible to achieve the goal of thoroughly cleaning the oral cavity.

### DISCLOSURE OF THE INVENTION

### TECHNICAL PROBLEMS

In respect of cleaning and health of the oral cavity, issues related to the cleaning of tongue have drawn people's attention and have become as important as the cleaning of teeth. In the night time, due to the decrease of salivary secretion and swallow, the furs are similar to a culture medium which provides the best condition for propagation, decomposition and fermentation of the bacteria, viruses, food debris, dead epitheliums. The furs are dirtier than the sputum after a whole night of fermentation. Many tools for brushing the furs have become available in the market. The conventional toothbrush includes a tongue brush on a back side of a brush head. But this is primarily provided for shaving the furs. Such an approach of shaving the furs has been strongly opposed by the dentists as it hurts the taste buds and the lingual papillae and causes amblygeustia. Like sweeping a carpet with a broom, only the surface can be cleaned while the dust inside the carpet cannot be removed. Similarly, the conventional shaving and brushing of the furs are not able to clean the oral waste at the roots of the taste buds and the lingual papillae, such as bacteria and food debris.

China Invention Patent Application No. CN02123943 as entitled "Three-D electric toothbrush" discloses a technical solution including a tooth brush head cap 9 located on an outer side of a drum-type brush 7. An end portion of the brush head cap is lower than an end portion of the drum-type brush 7. According to the specification, due to the function of the brush head cap, water and tooth-brushing foam generated when brushing the teeth with the drum-type brush come back into the teeth and the gaps thereof. Thorough removal of the oral waste cannot be guaranteed even if we rinse our teeth with clean water.

### SOLUTION TO THE PROBLEMS

### TECHNICAL SOLUTION

To overcome the aforementioned deficiency of the existing techniques, an objective of the present invention is to provide a back-flushing plate of a multifunctional oral care tool, which achieves thorough, safe and high-efficiency cleaning of the furs for the problems such as clearing the remaining liquid in the oral cavity.

A back-flushing plate of a multifunctional oral care tool of the present invention, a pair of brush heads 1 rotates inwardly for 360 degrees as driven by a pair of transmission rods 5, and the propelled water flow splashes onto the back-flushing plate 4.

To achieve the aforementioned goals, a back-flushing plate of a multifunctional oral care tool of the present invention, wherein: the multifunctional care tool includes a pair of brush heads rotating inwardly for 360 degrees, and the back-flushing plate is located at a back end of the brush heads to permit the water flow as propelled by the rotating brush heads to splash onto the back-flushing plate.

Wherein: the pair of brush heads is driven by a pair of transmission rods.

An end portion of the back-flushing plate is lower than end portions of the brush heads.

The end portion of the back-flushing plate is lower than the end portions of the brush heads by 4 to 6 mm.

The brush heads are brush heads made of a food-grade silica gel type of soft material.

The back-flushing plate is located at the back end of the brush heads and may be spaced from the end portions of bristles 2 by a gap.

A gap between the back-flushing plate and the transmission rods is 4.5 to 6.5 mm.

The back-flushing plate is detachably fastened to an upper end of the brush handle.

A surface of the back-flushing plate adjacent to the bristles is, when viewing from the top, elliptic or parabolic or a surface formed by bended lines.

A height of the back-flushing plate is 10 to 17 mm.

### ADVANTAGEOUS EFFECT OF THE INVENTION

### ADVANTAGEOUS EFFECT

According to the aforementioned solutions, the advantageous effect of the present invention is that:

By disposing a back-flushing plate at the back end of the brush-heads, with an end portion of the back-flushing plate being lower than the end portions of the brush heads, and with the brush heads being driven by the transmission rods to rotate 360 degrees inwards horizontally, with the rotations of the front ends of the bristles drawing a water flow to form a powerful suction flow. While at the rear ends of the bristles, the sucked water flow splashes onto the back-flushing plate and forms a powerful flush flow under the functioning of the back-flushing plate to form a powerful flush flow flushing the oral waste away.

### BRIEF DESCRIPTION OF THE ACCOMPANYING DRAWINGS

### DESCRIPTION OF THE ACCOMPANYING DRAWINGS

FIG. 1 is a rear structural diagrammatic view of a back-flushing plate of an embodiment according to the present invention.
FIG. 2 is a side structural diagrammatic view of the back-flushing plate of an embodiment according to the present invention.
FIG. 3 is a top structural diagrammatic view of the back-flushing plate of an embodiment according to the present invention.
FIG. 4 is a front structural diagrammatic view of the back-flushing plate of an embodiment according to the present invention.
FIG. 5 is a partial structural diagrammatic view of the back-flushing plate of an embodiment according to the present invention.

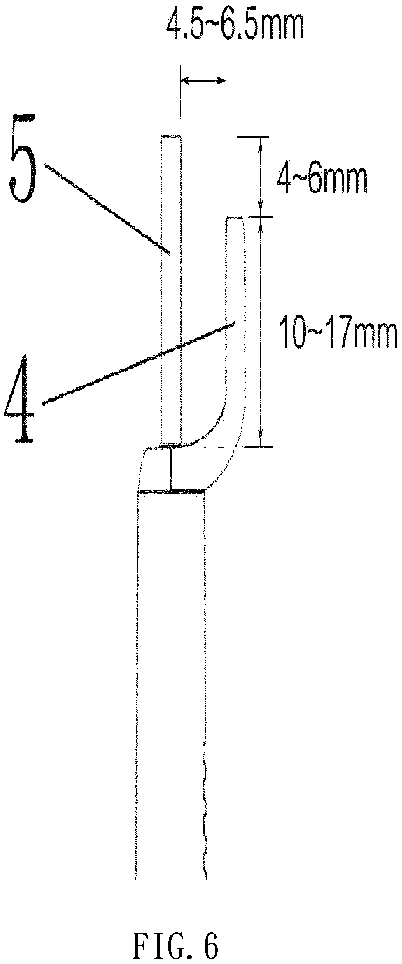

FIG. 6 is a side partial structural diagrammatic view of the back-flushing plate of an embodiment according to the present invention.

### BEST EMBODIMENT FOR CARRYING OUT THE INVENTION

### BEST IMPLEMENTATION OF THE INVENTION

The present invention is further illustrated in details hereinafter in connection with concrete embodiments. However, it should not be taken to limit the scope of the above subject of the present invention to the following embodiments. All techniques carried out based on the contents of the present invention shall be within the scope of protection of the present invention.

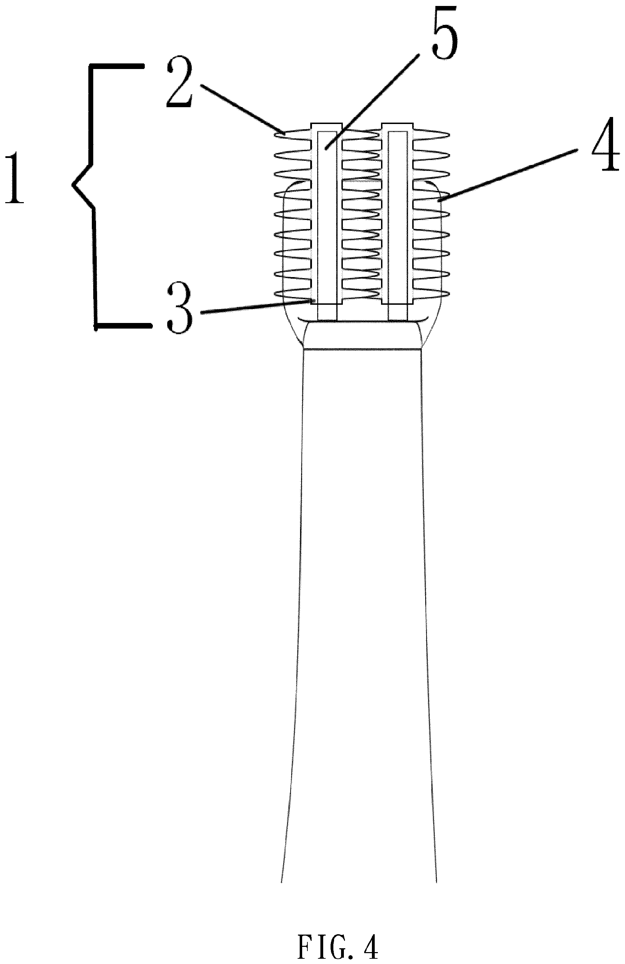

As shown in FIG. 4, in this concrete embodiment, there is a pair of transmission rods 5 respectively extending through the brush heads 1 at an upper end of a brush handle. The brush heads include bristles 2 and rollers 3. Wherein, the pair of brush heads 1 is able to perform 360 degrees of inward, horizontal rotation. It is preferred that the end portions of the transmission rods 5 are slightly lower than end the portions of the brush heads 1, and the end portion of a back-flushing plate 4 is lower the end portions of the brush heads 1. When in use, the water flow is reflected backwards by the back-flushing plate 4 to further flush the bristles 2 and the rollers 3 and to wash away the oral waste on the bristles 2 and the rollers 3. Further cleaning of the brush heads 2 and the rollers 3 can be attained to provide an excellent cleaning effect.

Wherein, the brush heads 1 are made of a food-grade silica gel type of soft material.

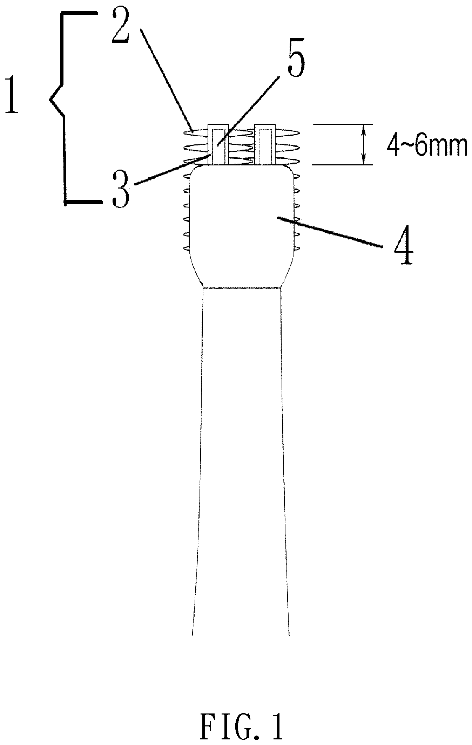

As shown in FIG. 1, a preferred embodiment structure of the present invention is as follows:

A pair of transmission rods 5 is respectively connected with a pair of brush heads 1. The brush heads are driven by the transmission rods to perform 360 ° rotation inwards horizontally, attaining oral cleaning of teeth, furs, etc.

Illustrating the using process taking the first concrete embodiment, cleaning of teeth, as an example as follows:

Since the brush heads 1 according to the present invention are made of a food-grade silica gel type of soft material and perform 360 degrees of inward, horizontal rotation, deep and thorough cleaning of the teeth can be attained. Further due to the support of the back-flushing plate 4, the bristles 2 will not injure the oral mucosa. During cleaning of the teeth, when the front ends of the bristles 2 are placed in a tooth gaps, each bristle 2 adjacent to a side of the tooth gap acts like a respective toothpick and rotates in a direction from the gum towards the tooth crown, rapidly cleaning the tooth gap while other bristles are cleaning the tooth face. The bristles 2 of the brush head at the other side also rotate in the direction from the gum towards the tooth crown to clean the tooth at the other side or occlusal surface. Thus, teeth can be cleaned rapidly. Regarding the tooth-brushing foam and the like remaining in the mouth, particularly at around the gums, when rinsing the mouth, the brush heads 1, through 360 degrees of inward, horizontally rotation driven by the transmission rods 5, the brush heads 1 rotate inwards horizontally. The front ends of the bristles rotate to draw a water flow and form a powerful suction flow, which sucks away remaining liquid at the gums. The rear ends of the bristles 2 splash the sucked water flow onto the back-flushing plate to form a powerful flush flow, which flushes away remaining foul matter such as the tooth-brushing foam. Under continuous rotation of the bristles 2 and splashing of the water flow, thorough cleanings of the teeth, the gums, and the remaining tooth-brushing foam are attained.

### Second Embodiment: Cleaning of Furs

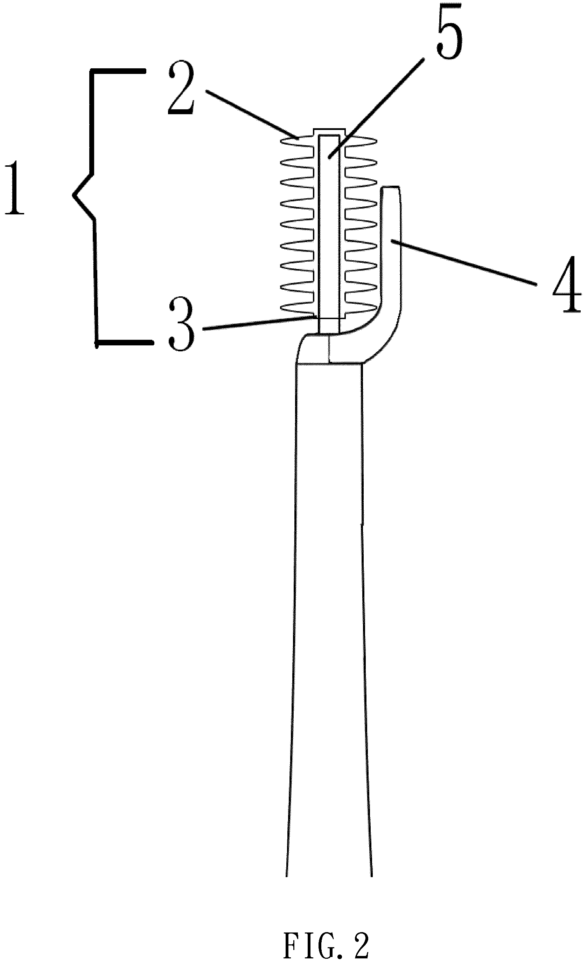

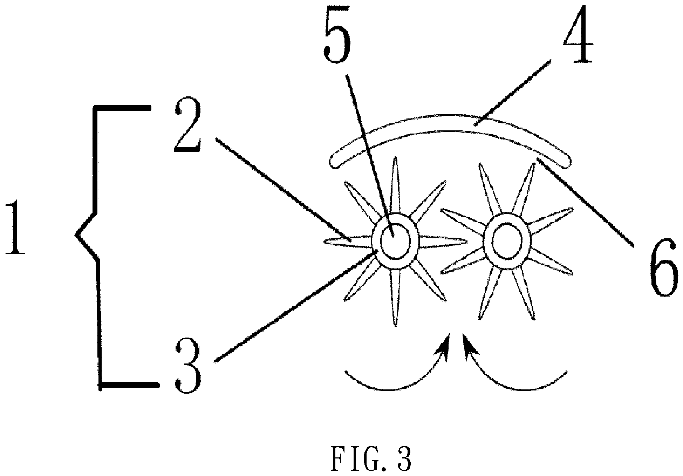

Since the brush heads 1 according to the present invention are made of a food-grade silica gel type of soft material, as shown in FIG. 3, the brush heads 1 rotate 360 ° inwards horizontally driven by the transmission rods 5. Also referring to FIG. 2, the front ends of the bristles 2 rotate to draw the tooth-brushing foam or the mouthwash, and form a powerful suction flow, which sucks away the oral waste at fur roots. The rear ends of the bristles 2 splash the sucked tooth-brushing foam or water flow onto the back-flushing plate to form a powerful flush flow, which flushes away the oral waste. Under continuous rotation of the bristles 2 and splashing of the water flow, thorough cleaning of the furs is attained. During cleaning of furs, when the soft bristles 2 made of food-grade silica gel type of soft material are proceeding with "rolling brushing" the furs, the brush heads 1 also can well "hold up" taste buds and lingual papillae to expose the gaps between the fur roots and perform cleaning of suction, flushing, and brushing. This unique cleaning approach of "suction, flushing, and brushing" "three-in-one" can not only deeply and thoroughly clean the furs and fermented objects without injuring the taste buds and the lingual papillae and activates and revives the sense of taste, but also attains health-care massage on the reflective zones of the tongue.

### Third Concrete Embodiment

As shown in FIG. 3, in another preferred embodiment of the present invention, the back-flushing plate 4 is located at the back end of the brush heads 1, and there can be a small gap 6 from the end portion of the bristles 2. In this embodiment, the gap between the back-flushing plate 4 and the transmission rods 5 is about 4.5 to 6.5 mm, in order for the brush heads 1 to generate a water flow driven by the transmission rods 5. The formed water flow splashes onto the back-flushing plate 4 and forms a powerful flush flow to flush away the oral waste. At the same time, with the small gap 6 between the back-flushing plate and the brush heads, the bristles can be well protected to prevent the bristles 2 from making contact with the back-flushing plate 4, which causes abrasion.

### Fourth Concrete Embodiment

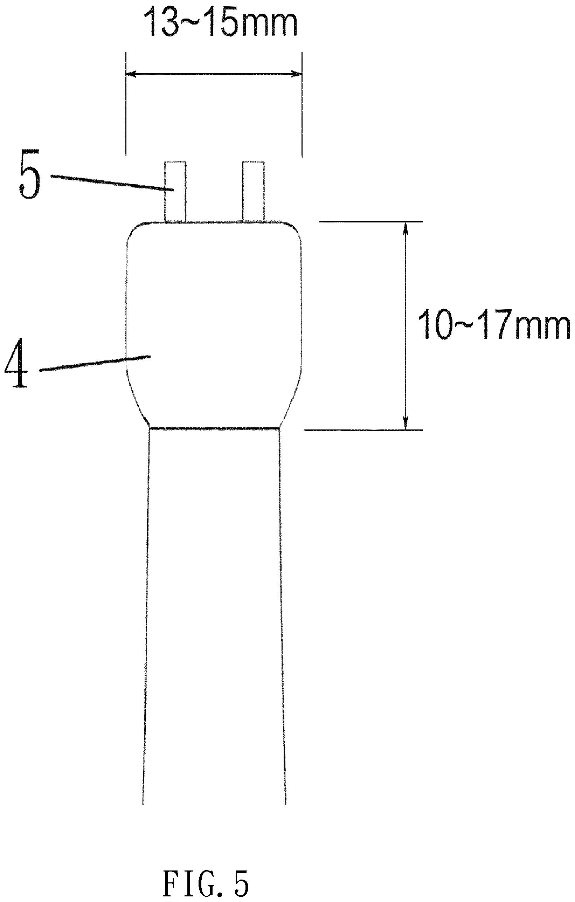

As shown in FIG. 5, the back-flushing plate 4 can be rectangular from a rear view, which preferably has transition round corners at four corners with a top view being elliptic. As shown in FIG. 3, the brush heads 1 rotate 360 ° inwards horizontally as driven by the transmission rods 5 and generate powerful suction to suck a water flow. The sucked water flow splashes onto the back-flushing plate 4. The water flow splashed onto the elliptic back-flushing plate forms a more powerful water flow with the reflection of the elliptic back-flushing plate 4, and concentratedly reflects to the portion being cleaned by the bristles 2 to attain the goal of thoroughly flushing away the oral waste.

Wherein, the elliptic back-flushing plate 4 can wrap, but should not completely wrap, the brush heads 1.

Furthermore, a surface of the back-flushing plate 4 opposite to the brush heads 1 can also adopt a parabolic shape so that the water flows reflected from the both sides have a faster speed. Another preferred solution is that each of the reflection surfaces at two ends of the back-flushing plate 4 can have a relatively obvious bend towards a center, to make the reflected flow more concentrated.

### Fifth Concrete Embodiment

In this embodiment, a top end of the back-flushing plate 4 is preferably 4 to 6 mm lower than top ends of the brush heads 1, as shown in FIG. 1. Because a portion of the brush heads 1 higher than the back-flushing plate 4 can suck liquid such as water and tooth-brushing foam, and the sucked liquid, through the brush heads 1, splashes onto a portion not overlapped with the back-flushing plate 4 and forms a powerful suction flow to bring away the oral waste. As proved by experiments, when the top ends of the back-flushing plate 4 is lower than the top ends of the brush heads 1 by 4 to 6 mm, the requirement of cleaning off the oral waste can be totally fulfilled. Furthermore, the larger the value the better the effect to suck away the oral waste. Thus, to meet the needs of different suction strengths, the back-flushing plate 4 can be detachably fastened to the brush handle. In this embodiment, the back-flushing plate 4 has a protrusion at a bottom end thereof, and the brush handle includes a groove at a top end aligned with the protrusion such that the back-flushing plate 4 can slidably fasten from a side of the brush handle under the cooperation of the two elements. A net height of the back-flushing plate 4 is preferably about 10 to 17 mm, and a width of the back-flushing plate is preferably about 13 to 15 mm.

It is known by a person skilled in the art that although the aforementioned embodiments respectively use the dimensions of different parts for illustrations, the technical features of the dimensions in the aforementioned embodiments can be used in combination.

## Claims

1. A back-flushing plate of a multifunctional oral care tool, **characterized in that**: the multifunctional oral care tool comprises a pair of brush heads performing 360 degrees of inwards rotation, with the back-flushing plate disposed at a back end of the brush heads so that a water flow driven by the rotating brush heads splashes onto the back-flushing plate, with an end portion of the back-flushing plate being lower than end portions of the brush heads.

2. The back-flushing plate of the multifunctional oral care tool as claimed in claim 1, **characterized in that**: the pair of brush heads is driven by a pair of transmission rods.

3. The back-flushing plate of the multifunctional oral care tool as claimed in claim 1, **characterized in that**: the end portion of the back-flushing plate is lower than the end portions of the brush heads by 4 to 6 mm.

4. The back-flushing plate of the multifunctional oral care tool as claimed in any of claims 1 to 3, **characterized in that**: the brush heads are brush heads made of a food-grade silica gel type of soft material.

5. The back-flushing plate of the multifunctional oral care tool as claimed in claim 1, **characterized in that**: the back-flushing plate is disposed at the back end of the brush heads and can have a gap from end portions of bristles.

6. The back-flushing plate of the multifunctional oral care tool as claimed in claim 2, **characterized in that**: a gap between the back-flushing plate and the transmission rods is 4.5 to 6.5 mm.

7. The back-flushing plate of the multifunctional oral care tool as claimed in claim 1, **characterized in that**: the back-flushing plate is detachably fastened to an upper end of the brush handle.

8. The back-flushing plate of the multifunctional oral care tool as claimed in claim 1, **characterized in that**: a surface of the back-flushing plate adjacent to the bristles has a top view of an elliptic or parabolic shape, or is a surface formed by bended lines.

9. The back-flushing plate of the multifunctional oral care tool as claimed in claim 7, **characterized in that**: a height of the back-flushing plate is 10 to 17 mm.
